# EUROPEAN PATENT APPLICATION

(11) **EP 1 906 350 A1**
(43) Date of publication of application: **02.04.2008**
(21) Application number: 06020544.0
(22) Date of filing: 29.09.2006
(51) Int. Cl.: G06Q 30/00

(54) **Method and system for collecting IP TV channel statistics**

(71) Applicant: Koninklijke KPN N.V., 2516 CK The Hague (NL)
(72) Inventor: van Steenbergen, Ate Sander, 9737 NN Groningen (NL); de Boer, Eetze Arjen, 1403 JN Bussum (NL)
(74) Representative: Wuyts, Koenraad Maria

(57) **Abstract**

It is disclosed that, in order to collect viewing statistics, channel selection information can be collected from one or more signal distribution device's that are used to connect a plurality of customer environments to an IP based network via which one or more television channels are distributed. By each signal distribution device information is logged that originates from set-top boxes comprised by customer environments. The logged channel selection information is collected by a server that is connected to a network. If the information collection takes place frequently, it is possible to achieve an on-line overview of the viewing behavior of customers.

## Description

### FIELD OF THE INVENTION

The present invention relates to a method and a system for collecting information with regard to the viewing behavior of customers in an IP television environment.

### BACKGROUND OF THE INVENTION

There is an increasing demand to determine the viewing patterns of viewers in a television environment. For instance, U.S. patent No. 6,983,478 to Grauch et al. describes a system and a method for obtaining information on the viewing behaviour of viewers with regard to particular programs, and on particular interactive applications. According to the method of Grauch et al. information about a plurality of subscriber's use of a media delivery network is collected after which this information is transmitted to a merge processor. The merge processor merges this information with programming data in order to analyse the subscribers' selection of television programs. However, this analysis results in the recognition of viewing patterns over a certain period of time.

### AIM OF THE INVENTION

It is an object of the invention to eliminate the drawbacks of the prior art and to provide a method and a system for collecting information in an IP television environment.

### SUMMARY OF THE INVENTION

In accordance with this invention, a method is disclosed for collecting channel selection information from one or more signal distribution devices connected to an IP based network, the IP based network being used for distributing one or more television channels from a content distribution system to one or more customer environments, the method comprising the steps of:
- logging channel selection information, by a signal distribution device, the channel selection information corresponding to a command to the set-top box and comprising information originating from a set-top box; and
- collecting, by a server, the channel selection information from one or more signal distribution devices via a network.

In a first aspect of the invention is disclosed that in an IP based network via which television services are provided to customers channel collection information is collected from a signal distribution device that is situated outside the customer's domain. A signal distribution device is for instance a digital subscriber line access multiplexer (DSLAM) or other types of distributing and multiplexing devices that reside in the access infrastructure of a provider. A signal distribution device may be able to receive multiple signals from a core network, and distribute one or more of these signals to the customer's locations. The channel collection information is collected from a signal distribution device in order to obtain data about the viewing behavior of customers watching television programs. The channel collection information comprises information that is received by the signal distribution device from one or more set-top boxes. For instance, protocol messages, defined in a communication protocol between a set-top box and a signal distribution device, are logged instantaneously or nearly instantaneously by the signal distribution device when the messages are received. The communication protocol can for instance be the Internet Group Management Protocol (IGMP). Using the IGMP protocol, a set-top box can select one particular data stream out of a collection of data streams that is provided to a signal distribution device. Collecting the information that is already logged by a plurality of signal distribution device's provides the possibility to get an overview of the viewing behavior of customers without modifications at the set-top boxes being necessary. The only modification that is required is at the signal distribution device's that are outside the customer domain. The channel selection information can also comprise other information such as but not limited to the moment that information from a set-top box has been received by the signal distribution device, and/or the address (e.g. the IP address) of the set-top box or residential gateway from which the information has been received.

In another aspect of the present invention it is disclosed that the channel selection information logged by a signal distribution device is collected instantaneously or nearly instantaneously after this information is logged by the signal distribution device. Since this logging takes place instantaneously or nearly instantaneously it is possible to have a (nearly) real-time overview of the number of customers that are viewing a particular television channel at a certain moment in time. The channel selection information can be used for a variety of real time or nearly real time purposes. Since it is known how many subscribers are watching a specific television channel at a certain moment of time, it is possible to insert commercial information during a particular television program that turns out to be watched by many customers at a certain moment in time.

A variety of actions can be initiated dynamically based on the channel selection information that is collected from signal distribution devices. For instance, the number of television sets that are tunes in on a particular television channel at a certain moment in time can be made available to advertisers so that advertisers are informed which programs are popular at a certain moment in time. In addition or alternatively, the information relating the number of viewers can also be used to choose a moment in time for broadcasting certain commercial information. For example, it can be agreed in a contract between a broadcast company and an advertiser that a commercial is to be broadcasted when a minimum number of viewers are actually watching a television program. Because according to the present invention real time or nearly real time viewing information is available, the broadcast company exactly knows when to broadcast the commercial in order to fulfil the requirements of the advertiser. The viewing information can also be used for an auction mechanism in which several advertisers participate. The broadcast company can select a certain moment of time when a large number of customers are actually viewing a television channel and ask each advertiser to make a bid. The highest bid can then be selected in order to determine which commercial is to be broadcasted. The channel selection information collected from the signal distribution devices can also be made available to Internet or private networks such as an IP VPN (IP virtual private network).

Another possible mechanism is to select a television program to be broadcasted when many customers are watching a particular television channel. In this way a broadcast company has a means to broadcast popular or high quality television programs (such as A-films rather then B-films) at appropriate moments.

Further, the channel selection information that is collected from signal distribution devices can also be used for adjusting parameter settings in the IP based network. For instance, more bandwidth can be allocated to a particular television channel when many customers are viewing this channel. Based on the collected channel selection information it can also be decided to broadcast a particular television channel in HDTV format. More in general, quality of service parameters can be adjusted based on the information that is collected.

Any appropriate protocol can be used to transfer the channel selection information from a signal distribution device to a server. For instance, a file transfer protocol such as FTP may be used to transfer a logfile to the server. The transfer of the channel selection information can be via the IP based network or via another network. The server for collecting channel selection information can be connected to both the IP based network and the other network. The latter network can be of any type such as a private network, a management network, a fixed network, a mobile network, an IP network or a non-IP network. It is also possible that the server is only connected to the other network and not to the IP based network. If another network than the IP based network is used to collect channel selection information, the signal distribution devices are also connected to that other network.

### BRIEF DESCRIPTION OF THE DRAWING FIGURE

The foregoing aspects and many of the attendant advantages of this invention will become better understood by reference to the following detailed description, when taken in conjunction with the accompanying drawing, wherein:
FIG. **1** is a block diagram illustrating an architecture for providing communications services to a customer.
FIG. **2** is a block diagram depicting a possible embodiment of the present invention.
FIG. **3** is a flowchart that illustrates a possible embodiment according to the present invention.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

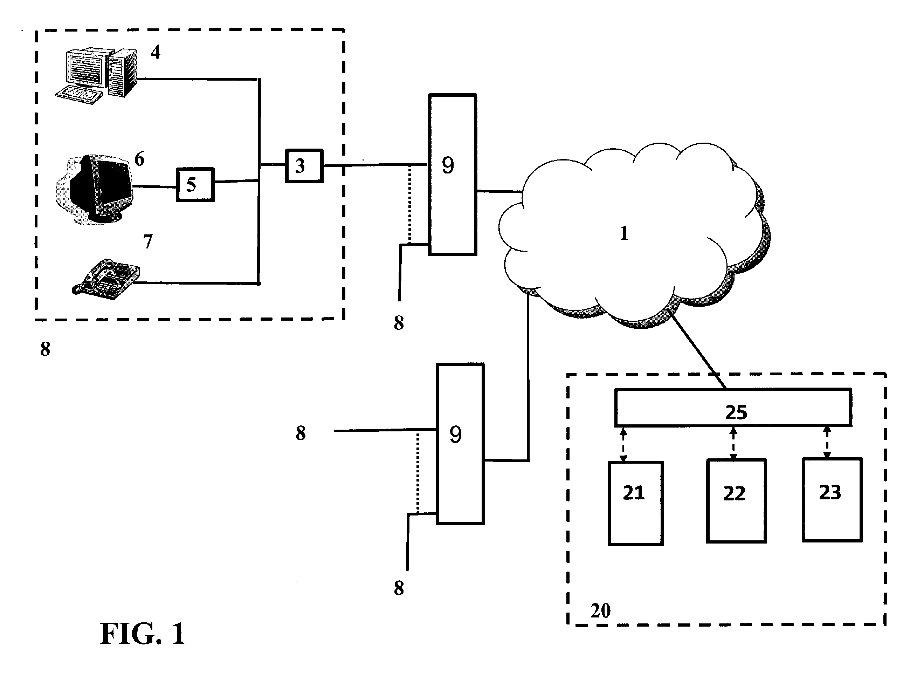

In FIG. **1** an IP based network (1) is depicted via which communications services such as triple play (telephony, television, data) services can be provided to customers. The IP based network (1) can be based on any type of communication technology, such as FTTH (fiber to the home), ADSL or VDSL. It may also be possible that the IP based network (1) is a mobile network or that the IP based network (1) comprises network segments based on mobile technology.

A content distribution system (20) is connected to the IP based network (1). The content distribution system (20) can for instance be an IP TV platform. In the architecture according to FIG. **1** there is a DSLAM (9) (Digital Subscriber Line Access Multiplexer) that is connected to the IP based network (1) and to a customer environment (8). There can be several customer environments (8) connected to a DSLAM (9), and there can be several DSLAM's (9) connected to the IP based network (1).

The DSLAM (9) is in general part of an access infrastructure and may or may not be operated by the same party that operates the IP based network (1). A DSLAM (9) takes connections from many customers and aggregates them onto a single, high-capacity connection to the IP based network (1). A DSLAM (9) is generally flexible and able to support multiple types of DSL (Digital Subscriber Line) in a single central office, and different varieties of protocol and modulation. For example, different customer environments (8) may be connected via a copper wire (xDSL) to the DSLAM (9). The customer environment (8) can be connected to the DSLAM (9) by means of a residential gateway (3). The residential gateway (3) is network device located at the customer premise that interfaces between the home network (comprising end-user devices) and the public access network (comprising e.g. the DSLAM (9)). The residential gateway (3) may also be able to mutually connect the end-user devices that reside at the customer location (8). End-user devices may for instance be a personal computer (4) via which data or Internet services can be provided, a television device (6) that is connected to the residential gateway (3) via a set-top box (STB) (5) for the provisioning of digital and/or interactive television, and an IP telephone (7) for providing telephony services. The provisioning of this combination of services is often called triple play. There may be no residential gateway (3) be present in the customer environment al all. This is the case when television, telephony and data/Internet are not integrated. The set-top box (5) is then for instance connected to the DSLAM (9) via a DSL modem.

The content distribution system (20) may comprise a network interface (25) for transmitting content via the IP based network (1) to the customer location (8). One or more communication protocol stacks can be comprised by the network interface (25) to enable a proper communication path to be established between the content distribution system (20) and the customer locations (8). In this way one or more television channels can be broadcasted by the content distribution system (20). However, other types of distribution concepts may be used instead of or additional to broadcasting, such as multicasting. The content distributions system (20) may also comprise one or more media servers (21, 22, 23) on which video and audio content is residing. There can be for instance one server being comprised by the content distribution system (20) for each television channel that is broadcasted.

Each television channel is broadcasted to the DSLAM's (9) by means of a data stream. A set-top box (5) can select one particular data stream out of a collection of data streams that is provided to a DSLAM (9). For this purpose the Internet Group Management Protocol (IGMP) can be used. For instance, if a particular data stream is to be selected the set-top box (5) can send a 'join' message to the DSLAM (9). The 'join' message is a message already defined in the IGMP protocol. As a result, a customer is able by means of this mechanism to select one particular television channel to be shown on his television device (6).

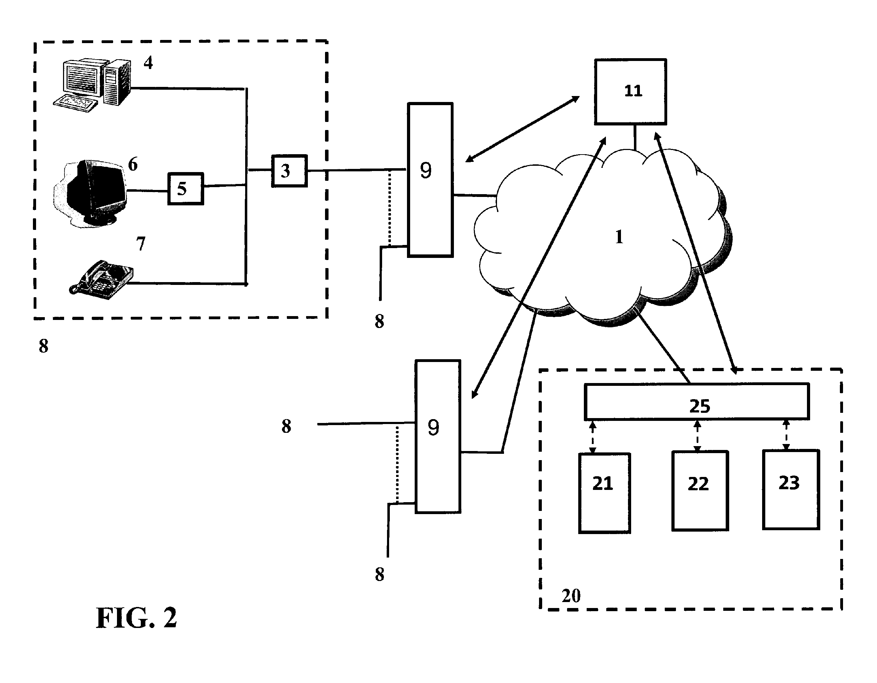

In FIG. **2** it is depicted that a server (11) is connected to the IP based network (1) that comprises means for collecting information from one or more DSLAM's (9). Channel selection information that can be collected from a DSLAM (9) is for example information relating the number of set-top boxes (5) at a certain moment of time that have selected one particular data stream. This is possible because the appearances of 'join' messages (and other IGMP messages) that are used to select or deselect a particular data stream are logged by a DSLAM (9), for instance in a logfile. Because this logging takes place instantaneously or nearly instantaneously it is possible to have a real-time overview of the number of customers that are viewing a particular television channel at a certain moment in time. Any appropriate protocol can be used to transfer the logged information from a DSLAM (9) to the server (11). For instance, a file transfer protocol such as FTP may be used to transfer a logfile to the server (11).

The channel selection information that is collected by the server (11) can be used for different purposes. The logfiles originating from one or more DSLAM's can be parsed at the server (11) after which the information can be displayed on a user interface (not depicted in FIG. 2) that is connected to server (11). In this way one can get a real time or nearly real time overview of the viewing behavior of a selection of customers such as the number of customers that are viewing a certain television channel at a certain moment of time. All or a part of the channel selection information from the DSLAM's (9) is retrieved by the server (11) periodically, so it is possible to identify trends with regard to the viewing behavior such as zapping behavior (from which television channel to which other television channel, time intervals between two zap actions, etc.).

An advantage of the present invention is that, based on the channel selection information retrieved by the server (11), actions can be performed in order to anticipate to the detected viewing behavior. It can be decided nearly real-time to allocate more bandwidth (for instance by means of high definition television (HDTV)) to television channels to are viewed by a large group of customers. This is beneficial if the bandwidth between the DSLAM's (9) and the IP based network (1) is limited. Another possible action is to insert extra commercial information in television channels that are viewed widely at a certain moment of time. The server (11) can for instance send the information via the IP based network (1) to the content distribution system (20). At the content distribution system (20) the information can be used, for instance by means of an algorithm, to select certain content residing at the media server (21, 22, 23) to be broadcasted.

According to the present invention it is also possible that the server (11) retrieves the channel selection information from the signal distribution devices (9) via another network than the IP based network (1). In this case the server (11) can be connected to both the IP based network (1) and the other network. The latter network can be of any type such as a private network, a management network, a fixed network, a mobile network, an IP network or a non-IP network. It is also possible that the server (11) is only connected to the other network and not to the IP based network (1). If another network than the IP based network (1) is used to collect channel selection information, the signal distribution devices (9) are also connected to that other network.

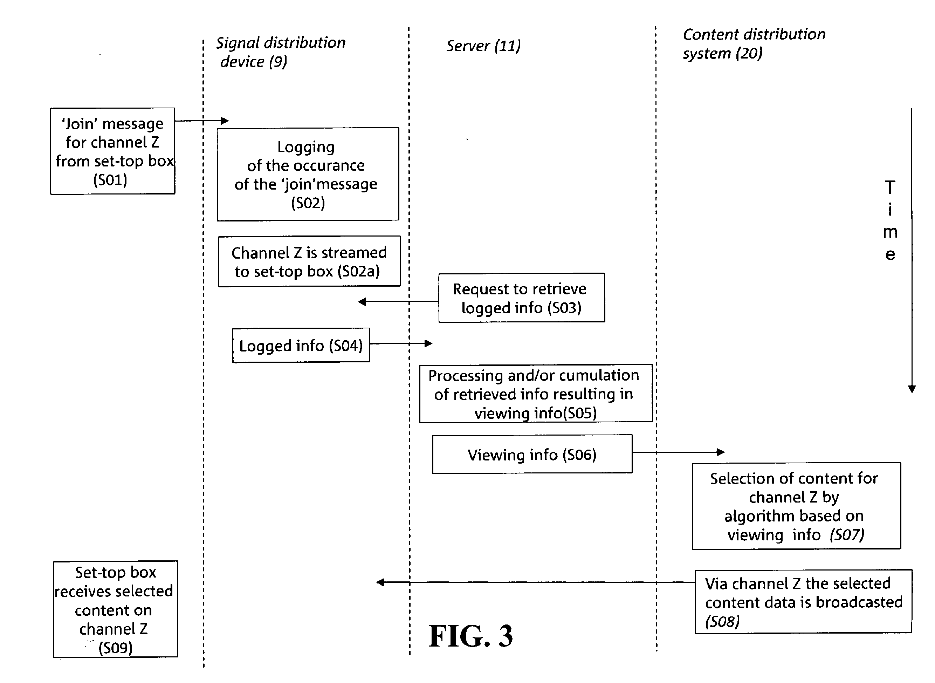

FIG. **3** a flowchart is depicted that illustrates a possible embodiment according to the present invention. In step s01 a 'join' message is sent from the set-top box (5) to the signal distribution device (9) via the IGMP protocol, for instance because a customer has chosen to watch television channel Z. In step s02 it is logged by the signal distribution device (9) that a 'join' message for channel Z has been received. Many IGMP messages may be received by the signal distribution device (9) from a plurality of set-top boxes (5) during a certain period of time (e.g. a one minute time interval). In step 02a channel Z is streamed to the set-top box (5) so that channel Z is shown on the television set (6). The server (11) can be programmed to periodically request (step s03) the signal distribution device (9) for the logged information. Upon this request the logged information is sent by the signal distribution device (9) to the server (11) (step s04). The server (11) will then process and/or cumulate the retrieved information resulting in viewing info (step s05). There are many different ways to use this viewing info. In this example the viewing info used to determine which content is to be broadcasted via channel Z. In step 06 the viewing info is sent by the server (11) to the content distribution system (20). In step 07 the viewing info is used by an algorithm to determine the appropriate content to be broadcasted (for instance broadcasting an A-film if many viewers are watching and broadcasting a B-film when few viewers are watching). The selected content is then broadcasted via channel (step 08). In step 09 the set-top box (5) receives the selected content.

## Claims

1. A method for collecting channel selection information from one or more signal distribution devices (9) connected to an IP based network (1), the IP based network (1) being used for distributing one or more television channels from a content distribution system (20) to one or more customer environments (8), the method comprising the steps of:
- logging channel selection information, by a signal distribution device (9), the channel selection information corresponding to a command to the set-top box (5) and comprising information originating from a set-top box (5); and
- collecting, by a server (11), the channel selection information from one or more signal distribution devices (9) via a network.

2. Method according to claim 1, whereby the channel selection information further comprises an IP address identifying the originating customer environment (8).

3. Method according to claim 1 or 2, whereby the channel selection information further comprises a time stamp identifying a moment that the information originating from the set-top box (5) is received.

4. Method according to any of the preceding claims, whereby said channel selection information is collected by server (11) instantaneously after the channel selection information is logged by the signal distribution device (9).

5. Method according to any of the preceding claims, whereby the signal distribution device (9) is a digital subscriber line access multiplexer (DSLAM).

6. Method according to claim 5, whereby information from the set-top box (5) is transported to the signal distribution device (9) by means of the IGMP protocol.

7. Method according to claim 6, whereby a join message or a leave message is used for transporting said information, the join message corresponding to a command for selecting a particular television channel and the leave message corresponding to a command for deselecting a particular television channel.

8. Method according to any of the preceding claims, the method further comprising the step of adjusting a parameter setting based on the channel selection information collected by the server (11).

9. Method according to claim 8, whereby said parameter is the quality of service of the IP based network (1).

10. Method according to any of the preceding claims, whereby said network and the IP based network (1) are the same.

11. A system for providing IP television services comprising an IP based network (1), one or more signal distribution devices (9), a content distribution system (20), and a server (11) that is connected to a network, the server (11) comprising an interface for collecting, via said network, channel selection information that is logged by one or more signal distribution devices (9), the channel selection information comprising information originating from a set-top box (5) and corresponding to a command to the set-top box (5).

12. A system according to claim 11, whereby the signal distribution device (9) is a digital subscriber line access multiplexer (DSLAM).

13. A system according to claim 11 or 12, whereby the signal distribution device (9) comprises an IGMP protocol stack.

14. A system according to claim 12 or 13, said DSLAM comprising a logging module for logging received IGMP messages in a logfile.

15. A system according to claim 14, said DSLAM and the interface of server (11) comprising a file transfer protocol stack for collecting said logfile by the server (11).

16. A system according to any of the claims 11-15, the content distribution system (20) being an IP TV platform.

17. A system according to any of the claims 11-16, whereby the collected information is used to determine for which television channel the available bandwidth is to be increased.

18. A server (11) comprising an interface for collecting, via a network, channel selection information that is logged by one or more signal distribution devices (9), the channel selection information comprising information originating from a set-top box (5) and corresponding to a command to the set-top box (5).

19. A server (11) according to claim 18, said interface comprising a protocol stack for collecting a logfile from a signal distribution device (9).

20. A server (11) according to claim 18 or 19, whereby said information comprises one or more IGMP messages.
